# EUROPEAN PATENT APPLICATION

(11) **EP 4 708 913 A2**
(43) Date of publication of application: **11.03.2026**
(21) Application number: 25189213.9
(22) Date of filing: 14.07.2025
(51) Int. Cl.: H04R 3/00, H04R 17/00, H04R 29/00, B60Q 1/00, B60Q 5/00, H04R 1/02

(54) **METHOD FOR CONTROLLING SOUND OUTPUT LAMP USING PIEZO AND APPARATUS THEREOF**

(30) Priority: 05.09.2024 KR 20240120552
(71) Applicant: Hyundai Mobis Co., Ltd., Gangnam-gu Seoul 06141 (KR)
(72) Inventor: KIM, Myeong Je, 16891 Yongin-si (KR)
(74) Representative: Vossius & Partner Patentanwälte Rechtsanwälte mbB

(57) **Abstract**

An apparatus for controlling a sound output lamp includes a piezo having a stacked structure and outputting a sound by vibrating an outer lens of the sound output lamp or a surface of a housing; an audio driver generating power for driving audio of the piezo, an over-current prevention device placed between the audio driver and the piezo and preventing, at the piezo, an over-current of a predetermined first frequency or higher in a high-frequency domain; and a control device providing the audio driver with an audio signal for controlling an audio output of the piezo.

## Description

### CROSS-REFERENCE TO RELATED APPLICATIONS

This application claims the benefit of priority to Korean Patent Application No. 10-2024-0120552, filed in the Korean Intellectual Property Office on September 5, 2024.

### TECHNICAL FIELD

The present disclosure relates to a technology for controlling a sound output lamp using a piezo, and more particularly, relates to a method for controlling a sound output lamp using a piezo, which may drive a piezo having high capacitance and low impedance in a sound output lamp using the piezo, and an apparatus thereof.

### BACKGROUND

A vehicle's headlamp plays an important role in both the vehicle's function and design. The headlamp provides visibility to a driver at night and alerts other vehicles and pedestrians to the vehicle's presence. The headlamp is often referred to as the eye of a vehicle and is a heavily weighted design element. It is also a major component that undergoes changes in a facelift model.

Before the 1970s, headlamps used incandescent bulbs called filaments, but their short lifespan and low luminance limited their use as headlamps. Halogen lamps were later developed to provide a wide angle of light spread, easy visibility, and miniaturization. Afterward, high intensity discharge (HID) lamps were developed, and then LED lamps are rapidly gaining ground.

Nowadays, automotive headlamps provide not only light irradiation for securing forward vision, but also entertainment or communication functions through the output of various video signals.

However, the automotive lamps including headlamps output video signals, but not audio signals.

In contrast, it is possible to configure a voice output device to be performed at another location of a vehicle other than automotive lamps. To output a voice to a headlamp, a hole for mounting a separate voice output device needs to be formed in the outer housing (generally, an outer lens) of the automotive lamp, and the voice output device needs to be installed in the hole. However, this may increase the workload and may cause various problems, such as external substances such as rainwater flowing into the lamp.

Accordingly, there is a need for improvement in automotive lamps, which are capable of performing various functions including entertainment and communication functions, by performing audio output in synchronization with the video output of the automotive lamps.

### SUMMARY

The present disclosure has been made to solve the above-mentioned problems occurring in the prior art while advantages achieved by the prior art are maintained intact.

An aspect of the present disclosure provides a method for controlling a sound output lamp using a piezo, which may drive a piezo having high capacitance and low impedance in a sound output lamp using the piezo, and an apparatus thereof.

An aspect of the present disclosure provides a method for controlling a sound output lamp using a piezo that may diagnose the open load of a piezo in a sound output lamp equipped with the piezo having high capacitance and low impedance and may prevent over-current occurring due to low impedance, and an apparatus thereof.

An aspect of the present disclosure provides a method for controlling a sound output lamp using a piezo that may adaptively control an output level of an audio signal in consideration of changes in capacitance and impedance of the piezo according to temperature changes, and an apparatus thereof.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a sound output lamp control apparatus includes a piezo, which is formed with a stacked structure and outputting a sound by vibrating an outer lens of a lamp or a surface of housing, an audio driver that generates power for audio driving of the piezo, an over-current prevention device placed between the audio driver and the piezo and preventing an over-current of the piezo in a high-frequency domain of a predetermined first frequency or higher, and a control device that provides the audio driver with an audio signal for controlling an audio output of the piezo.

According to an embodiment, the over-current prevention device may include at least one resistor or a low-pass filter having the first frequency as a cut-off frequency.

According to an embodiment, the control device may diagnose an open load of the piezo.

According to an embodiment, the control device may determine a frequency for diagnosing the open load of the piezo based on impedance according to a frequency of the piezo, and may diagnose the open load of the piezo by using an AC detection waveform of the determined frequency.

According to an embodiment, the control device may diagnose the open load of the piezo based on whether a predetermined specific voltage is detected through an open load diagnosis terminal equipped on a circuit board on which the piezo is mounted.

Furthermore, the sound output lamp control apparatus according to an embodiment of the present disclosure may further include a boost converter that supplies a driving voltage to an amplifier of the audio driver. The control device may control an output voltage of the boost converter depending on an output level of the audio signal.

According to an embodiment, the control device may estimate a temperature of the piezo based on a temperature value received from a temperature sensor of a vehicle or an internal temperature sensor of the lamp, and may adaptively control an output level of the audio signal based on capacitance and impedance of the piezo according to the estimated temperature.

Furthermore, the sound output lamp control apparatus according to an embodiment of the present disclosure may further include a protection device placed between the audio driver and the piezo and preventing electricity from flowing into the audio driver by discharging the electricity generated from the piezo by vibration of a vehicle in a state where electricity is not applied to the piezo.

According to an aspect of the present disclosure, a sound output lamp control apparatus includes a piezo, which is formed with a stacked structure and outputting a sound by vibrating an outer lens of a lamp or a surface of housing, an audio driver that generates power for audio driving of the piezo, and a control device that estimates a temperature of the piezo based on a temperature value received from a temperature sensor of a vehicle or an internal temperature sensor of the lamp, adaptively controls an output level of an audio signal based on capacitance and impedance of the piezo according to the estimated temperature, and provides the audio driver with the audio signal of which the output level is controlled.

According to an embodiment, the control device may determine a frequency for diagnosing the open load of the piezo based on impedance according to a frequency of the piezo, and may diagnose the open load of the piezo by using an AC detection waveform of the determined frequency.

Furthermore, the sound output lamp control apparatus according to an embodiment of the present disclosure may further include an over-current prevention device placed between the audio driver and the piezo and preventing an over-current of the piezo in a high-frequency domain of a predetermined first frequency or higher.

According to an embodiment, the over-current prevention device may include at least one resistor or a low-pass filter having the first frequency as a cut-off frequency.

Furthermore, the sound output lamp control apparatus according to another embodiment of the present disclosure may further include a boost converter that supplies a driving voltage to an amplifier of the audio driver. The control device may control an output voltage of the boost converter depending on an output level of the audio signal.

Furthermore, the sound output lamp control apparatus according to another embodiment of the present disclosure may further include a protection device placed between the audio driver and the piezo and preventing electricity from flowing into the audio driver by discharging the electricity generated from the piezo by vibration of a vehicle in a state where electricity is not applied to the piezo.

According to an aspect of the present disclosure, a method of controlling a sound output lamp including a piezo that outputs a sound by vibrating an outer lens of a lamp or a surface of housing, an audio driver that generates power for audio driving of the piezo, and a control device that provides the audio driver with an audio signal for controlling an audio output of the piezo includes receiving a temperature value from a temperature sensor of a vehicle or an internal temperature sensor of the lamp, estimating a temperature of the piezo based on the temperature value, and adaptively controlling an output level of the audio signal based on capacitance and impedance of the piezo according to the estimated temperature.

According to an embodiment, the controlling may include controlling an output voltage of a boost converter configured to supply a driving voltage to an amplifier of the audio driver depending on the output level of the audio signal.

Furthermore, the sound output lamp control method according to another embodiment of the present disclosure may further include determining a frequency based on impedance according to a frequency of the piezo when an open load of the piezo is to be diagnosed, and diagnosing the open load of the piezo by using an AC detection waveform of the determined frequency.

The features briefly summarized above with respect to the present disclosure are merely aspects of the detailed description of the present disclosure described below, and do not limit the scope of the present disclosure.

### BRIEF DESCRIPTION OF THE DRAWINGS

The above and other objects, features and advantages of the present disclosure will be more apparent from the following detailed description taken in conjunction with the accompanying drawings:
FIG. 1 illustrates a configuration of a sound output lamp control apparatus, according to an embodiment of the present disclosure;
FIG. 2 is an example diagram illustrating a process of diagnosing an open load of a piezo using an AC detection waveform;
FIGS. 3A and 3B are example diagrams illustrating a process of diagnosing an open load of a piezo using a detect pin;
FIG. 4 illustrates a block diagram of an embodiment for describing an over-current prevention device;
FIG. 5 is an example diagram illustrating a process of preventing an over-current by using a low-pass filter;
FIG. 6 is a block diagram of an embodiment for describing a configuration for variably controlling the power of an audio driver;
FIG. 7 is an example diagram for describing a process of controlling an output level of an audio signal based on capacitance and impedance of a piezo that change according to temperature changes;
FIG. 8 is a block diagram of an embodiment for describing a protection device;
FIG. 9 is a flowchart illustrating an operation of a sound output lamp control method, according to another embodiment of the present disclosure; and
FIG. 10 shows a block diagram of a computing system for executing a method for controlling a sound output lamp, according to another embodiment of the present disclosure.

### DETAILED DESCRIPTION

Hereinafter, various embodiments of the present disclosure will be described in detail with reference to the accompanying drawings, so that those skilled in the art may easily carry out the present disclosure. However, the present disclosure is not limited to embodiments set forth herein and may be modified variously in many different forms.

In describing an embodiment of the present disclosure, when a specific description of the related art is deemed to obscure the subject matter of embodiments of the present disclosure, the detailed description will be omitted. In addition, in the drawings, parts that are not related to the description of the present disclosure are omitted, and similar parts are given similar reference numerals.

In the present disclosure, it will be understood that when an element is referred to as being "connected" or "coupled" to another element, it may be directly connected or indirectly connected to another element. In addition, when some part 'includes' or "possess" some elements, unless explicitly described to the contrary, it means that other elements may be further included but not excluded.

In the present disclosure, expressions such as "first," or "second," and the like, may express their elements regardless of their priority or importance and may be used to distinguish one element from another element but is not limited to these components. Therefore, without departing from the scope of the present disclosure, a first component of an embodiment may be referred to as a second component of another embodiment. Similarly, a second component of an embodiment may be referred to as a first component of another embodiment.

In the present disclosure, components that are distinguished from each other are only for clearly describing characteristics, and do not mean that the components are necessarily separated. That is, a plurality of components may be integrated to form a single hardware or software unit, or a single component may be distributed to form a plurality of hardware or software units. Accordingly, such integrated or distributed embodiments are included in the scope of the present disclosure, even though not mentioned separately.

In the present disclosure, components described in various embodiments do not necessarily mean essential components, and some may be optional components. Therefore, an embodiment composed of a subset of components described in an embodiment is also included in the scope of the present disclosure. In addition, embodiments including other components in addition to the components described in various embodiments are also included in the scope of the present disclosure.

In the present disclosure, expressions of positional relationships used herein, such as upper, lower, left, and right are described for convenience of description. When viewing the drawings shown in this specification in reverse, the positional relationship described in the specification may be interpreted in the opposite manner.

In the disclosure, the expressions "A or B", "at least one of A and B", "at least one of A or B", "A, B, or C", "at least one of A, B, and C", and "at least one of A, B, or C" may include any and all combinations of one or more of the associated listed items.

To use a piezo as an external speaker, high output is required. For high output, it is necessary to use a product with high capacitance of 1 uF or more.

The piezo for high output needs to use a multi-layer stacking method to increase capacitance. As a result, an impedance value according to a frequency becomes lower than that of a general piezo, thereby causing over-current at a high frequency. Moreover, when the piezo is used as an external speaker, the piezo is mainly used to provide a notification sound. Accordingly, it is difficult for a driver inside a vehicle to perceive failure, even though the piezo may cause serious accidents when it fails.

As described above, embodiments of the present disclosure may control a sound output lamp such that the sound output lamp using a piezo having the high capacitance of 1 uF or more is capable of operating normally. It is possible to diagnose the open load of the piezo, to prevent over-current that may occur due to low impedance, and to adaptively control the output level of an audio signal in consideration of a change in capacitance and impedance of the piezo according to the change in temperature.

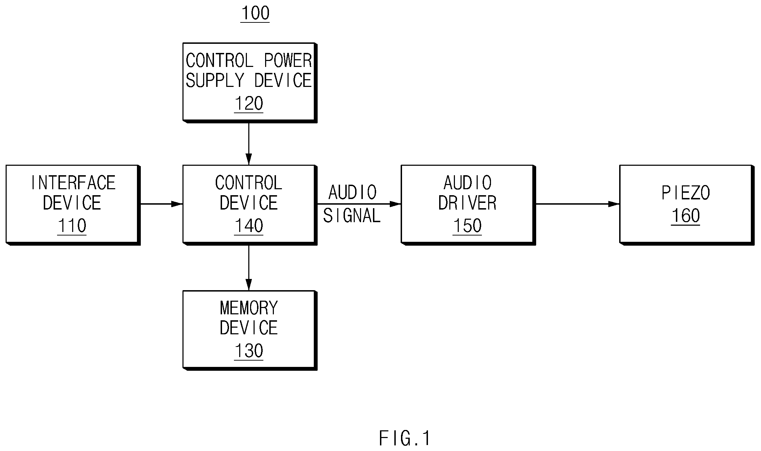

FIG. 1 illustrates a configuration of a sound output lamp control apparatus, according to an embodiment of the present disclosure.

Referring to FIG. 1, a sound output lamp control apparatus 100 according to an embodiment of the present disclosure includes an interface device 110, a control power supply device 120, a memory device 130, a control device 140, an audio driver 150 and a piezo 160.

The interface device 110 provides the control device 140 with a lamp control signal from a vehicle, and information (e.g., surrounding environment information, road information, or the like) obtained from a sensor, and a navigation system.

Here, the interface device 110 may be a general configuration component provided in the vehicle and may include all interface components provided in the vehicle.

The control power supply device 120 supplies a power source for driving the control device 140 from a vehicle battery.

The memory device 130 may store all pieces of data related to the technology of the present disclosure, and may store data for, for example, audio data, an algorithm for controlling an audio signal, or the like.

Based on information obtained from the vehicle, the control device 140 controls the light source output of a lamp or controls the audio output.

According to an embodiment, the control device 140 may diagnose an open load of the piezo 160 and may provide the audio driver 150 with an audio signal for controlling the audio output of the piezo 160. The piezo 160 may have a stacked structure.

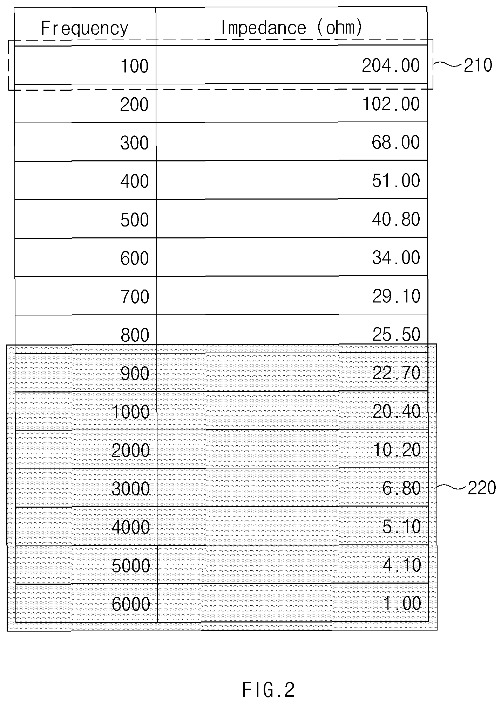

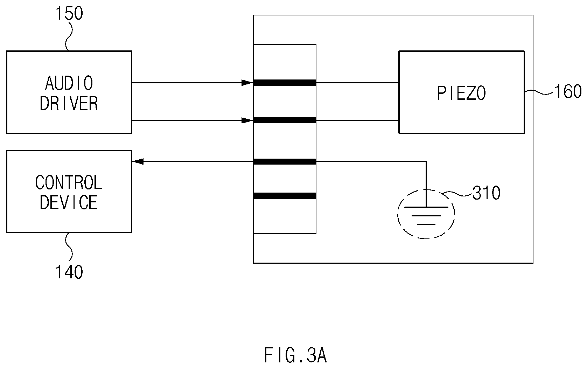

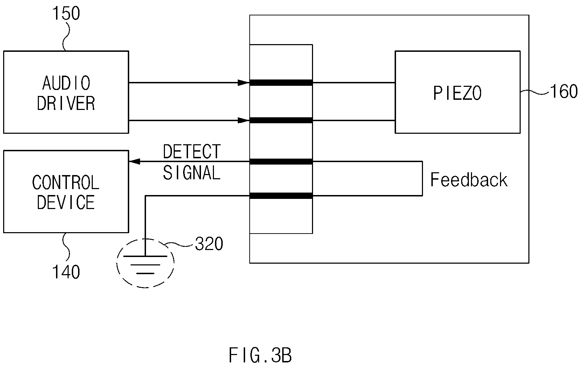

According to an embodiment, the control device 140 may determine a frequency for diagnosing the open load of the piezo 160 based on impedance according to the frequency of the piezo 160, and may diagnose the open load of the piezo 160 by using an AC detection waveform of the determined frequency, or diagnose the open load of the piezo 160 based on whether a predetermined specific voltage is detected through an open load diagnosis terminal (or a detect pin) provided on a circuit board on which the piezo 160 is mounted. The process of diagnosing the open load in this way is described in detail with reference to FIGS. 2, 3A, and 3B.

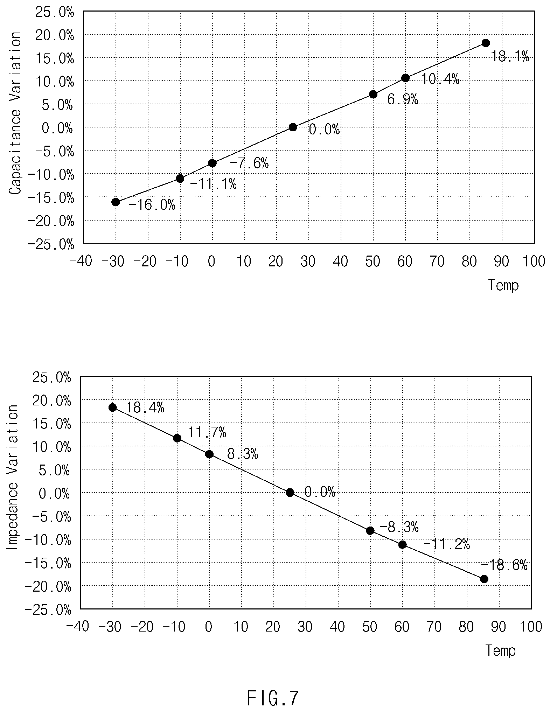

According to an embodiment, the control device 140 may estimate the temperature of the piezo 160 based on a temperature value received from a temperature sensor of the vehicle or an internal temperature sensor of a lamp, and may adaptively control the output level of the audio signal based on the capacitance and impedance of the piezo 160 according to the estimated temperature. The process of controlling the output level of the audio signal according to a temperature change is described in detail with reference to FIG. 7.

The audio driver 150 generates power for audio driving based on the audio signal input from the control device 140, and provides the generated power to the piezo 160.

In the meantime, the audio driver 150 receives an audio signal from the control device 140 installed in the vehicle, converts the audio signal into a pulse-width-modulation (PWM) signal, and amplifies the PWM signal. It is desirable to apply a D Class amplifier with high performance, high efficiency, and ultra-light weight as the audio driver 150.

The D Class amplifier is an amplifier that amplifies the audio signal in a digital state. The digital amplifier converts the audio signal into the PWM signal and then amplifies the PWM signal.

The piezo 160 indicates a piezo speaker, and outputs a voice to be output based on the power input from the audio driver 150.

In this case, the piezo 160 may come into contact with the outer lens or housing of the lamp and may output voice by vibrating the surface of the outer lens or the housing.

The piezo 160 refers to an element that uses the piezoelectric effect in reverse, which generates electricity when pressure is applied. When the piezo 160 is repeatedly contracted and expanded in response to an electrical signal, sound is output depending on vibration.

The piezo 160 is in close contact with the inner surface of the outer lens to provide vibration corresponding to the audio signal to the outer lens. Accordingly, the outer lens may vibrate, and the vibration outputs sound in the forward direction of an automotive lamp (i.e., sound output lamp).

In the meantime, it is desirable that the contact surface of the outer lens is configured to correspond to one side of the piezo 160 in shape such that vibration is smoothly delivered, when one side of the piezo 160 is in close contact with the inner surface of the outer lens.

In other words, the contact surface of the piezo 160 and the contact surface of the outer lens are formed to correspond to each other in shape, and thus as the contact ratio increases, the vibration of the piezo may be smoothly delivered to the outer lens.

Although not shown in FIG. 1, the sound output lamp, to which the technology of the present disclosure is applied, may include a light source, which emits light, and an outer lens placed in front of the light source.

Here, the light source may be mainly applied to daytime running light (DRL), commonly referred to as a general vehicle headlamp. However, the light source may also be applied to various automotive lamps such as turn signals, fog lamps, side markers, rear lamps, and brake lights.

Here, the outer lens may be positioned in front of the light source in the direction of light irradiation, and operates as a housing for the automotive lamp to protect the light source from being exposed to the outside, while also allowing the light irradiated from the light source to be smoothly dispersed.

An audio amplifier equipped in the audio driver 150 measures the impedance based on the measured current at an output terminal by applying DC power to diagnose whether a speaker coil is open. A speaker has constant impedance regardless of frequency. When the impedance generally exceeds 50 Ω, an amplifier output terminal is diagnosed as being open and then an operation of the speaker is stopped. In this case, for a normal operation, it is necessary to disable the open load function when the diagnostic function is in operation.

The sound output lamp control apparatus 100 according to an embodiment of the present disclosure may diagnose the open load of the piezo 160 by using an AC detection waveform or an open load diagnosis terminal (or a detect pin) equipped on a circuit board (e.g., FPCB) equipped with a piezo.

FIG. 2 is an example diagram illustrating a process of diagnosing an open load of a piezo using an AC detection waveform.

As shown in FIG. 2, because impedance higher than 204 Ω (210) at 100 Hz is detected for DC (0 Hz), an open load fault occurs. Accordingly, an apparatus according to an embodiment of the present disclosure needs to use an AC detection waveform when diagnosing the open load of a piezo.

In detail, the apparatus according to an embodiment of the present disclosure may diagnose the open load of the piezo by determining a frequency for diagnosing the open load of the piezo based on the impedance of the piezo according to a frequency and detecting the impedance of the piezo by using the AC detection waveform of the determined frequency. In the case of FIG. 2, the apparatus may diagnose the open load of the piezo based on the impedance of the piezo detected at the corresponding frequency by determining the frequency of the AC detection waveform at a frequency (220) (i.e., a frequency of 900 Hz or higher) where the impedance of the piezo is less than 25 Ω and detecting the impedance of the piezo by using the AC detection waveform of the frequency determined at 900 Hz or higher. According to an embodiment, the frequency of the AC detection waveform may be determined at a frequency having impedance, which does not exceed a predetermined open load threshold value. The open load threshold value may be determined by a business operator or individual providing the technology of the present disclosure, and may be determined based on impedance data of the piezo according to the frequency.

FIGS. 3A and 3B are example diagrams illustrating a process of diagnosing an open load of a piezo using a detect pin.

As shown in FIG. 3A, an apparatus according to an embodiment of the present disclosure may diagnose the open load of a piezo by adding a terminal capable of identifying a connection status in addition to a polarity terminal of the FPCB equipped with the piezo 160. When a FPCB has a GND terminal or there is a terminal 310 for a specific voltage, the control device 140 may diagnose the open load of the piezo 160 by detecting GND or a specific voltage based on a detect signal received from the FPCB of the piezo by adding only one detect pin.

Moreover, as shown in FIG. 3B, when the FPCB equipped with the piezo 160 has a GND terminal or there is no terminal for a specific voltage, the apparatus according to an embodiment of the present disclosure may configure a loopback circuit with two detect pins by adding two detect pins and may diagnose the open load of the piezo by detecting the GND or a specific voltage 320, which is provided from the outside of the FPCB of the piezo 160 to the detect pin of the FPCB. In other words, the control device 140 may provide the GND or the specific voltage to the FPCB through one detect pin and may diagnose the open load of the piezo 160 based on whether the GND or the specific voltage provided to the FPCB is detected through the loopback circuit with the remaining detect pins.

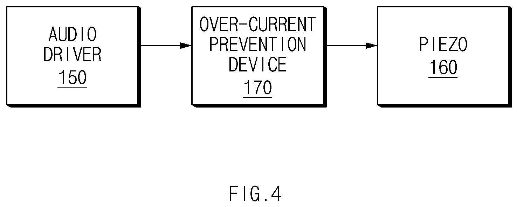

FIG. 4 illustrates a block diagram of an embodiment for describing an over-current prevention device.

As illustrated in FIG. 4, an apparatus according to an embodiment of the present disclosure may further include an over-current prevention device 170, which is disposed (or placed) between the audio driver 150 and the piezo 160 and which is used to prevent over-current of the piezo 160 in a high-frequency domain having a predetermined first frequency or higher.

The impedance is close to 0 Ω in a high-frequency domain due to the characteristics of the piezo 160, and thus over-current fault may occur. Accordingly, the over-current prevention device 170 is required to prevent the over-current of the piezo 160 in the high-frequency domain.

According to an embodiment, in a case of the audio amplifier of the audio driver 150, a speaker in which the impedance is the same throughout the entire frequency band is designed to be used. When the piezo 160 is used, the over-current prevention device 170 may be configured by arbitrarily adding a resistor such that the minimum impedance in the high-frequency domain is the impedance that the speaker has.

According to an embodiment, a resistor with the rated wattage of 5 to 10 W is typically guided on one side of the speaker line, and thus the over-current prevention device 170 may be implemented by using a single resistor with the rated wattage of 5 W, for example, a DIP type cement resistor. In this case, the used DIP type cement resistor has a high rated wattage, and thus a method of lowering the rated wattage may also be used.

For example, the over-current prevention device 170 may be implemented by connecting the piezo 160 to two lines in a differential method and adding a resistor to each line. Accordingly, the apparatus according to an embodiment of the present disclosure may lower the rated wattage that each resistor needs to withstand, and the sum of the two added resistor values may be determined to obtain the required resistance value. Furthermore, the apparatus according to an embodiment of the present disclosure is not limited or restricted to adding two resistors, and may be composed of three or more resistors depending on the rated wattage and the required resistance value.

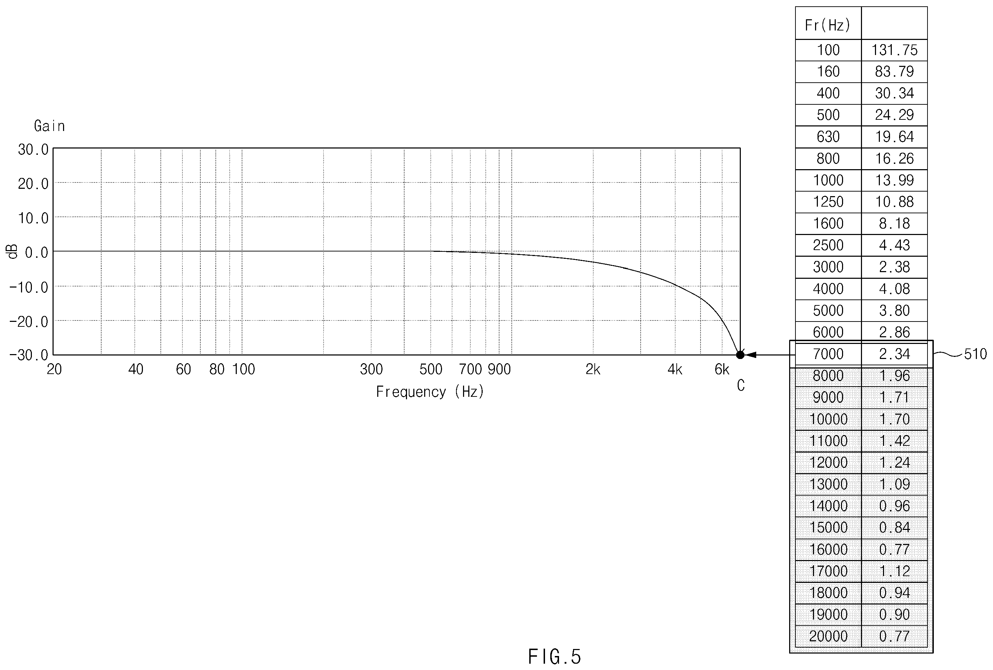

FIG. 5 is an example diagram illustrating a process of preventing an over-current by using a low-pass filter.

Moreover, the over-current prevention device 170 may be implemented by using a low-pass filter without adding a resistor to prevent the over-current of the piezo 160 at a high frequency. Here, the low-pass filter may be a software filter. The over-current prevention device 170 may be implemented as the software filter within the control device 140.

Because the audio amplifier of the audio driver 150 specifies the maximum output according to the impedance of the speaker, the maximum frequency, at which the impedance capable of being supported by the audio amplifier is maintained, may be selected as a cut-off frequency from impedance data of the piezo 160 for each frequency. In this case, when the piezo 160 deviates from the corresponding frequency, the over-current may occur because the impedance is lower than that supported by the audio amplifier.

Accordingly, as shown in FIG. 5, the over-current prevention device 170 may apply a low-pass filter with a cut-off frequency of 7000 Hz (510), and thus frequency components of 7000 Hz or higher may be attenuated, thereby preventing the over-current.

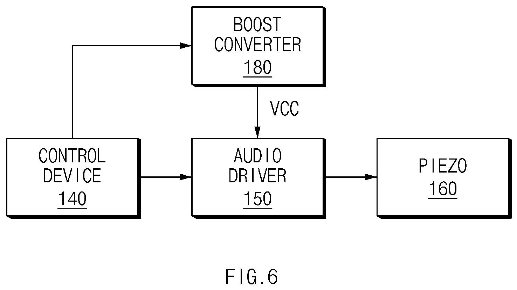

FIG. 6 is a block diagram of an embodiment for describing a configuration for variably controlling the power of an audio driver.

The high output from an audio amplifier is required to output a sound from a lamp. An output voltage needs to be increased to increase the output from the audio amplifier. Accordingly, a supply voltage supplied to the audio amplifier needs to be increased by a rail-to-rail concept.

To increase the supply voltage, a boost converter is installed in front of an audio driver, and power is supplied through the boost converter. However, when the supply voltage is fixed, efficiency may decrease, and heat may be generated when it is used with the volume lowered depending on situations.

Accordingly, as illustrated in FIG. 6, the apparatus according to an embodiment of the present disclosure may further include a boost converter 180 for supplying a driving voltage VCC to an audio amplifier of the audio driver 150. The control device 140 may increase the efficiency of the sound output lamp by controlling the output voltage of the boost converter 180 according to the output level of the audio signal.

In this case, when boosting of a supply voltage is not required, the apparatus according to an embodiment of the present disclosure may output the voltage of the boost converter 180 bypassing the voltage of the boost converter 180 without switching the voltage of the boost converter 180 under the control of the control device 140.

FIG. 7 is an example diagram for describing a process of controlling an output level of an audio signal based on capacitance and impedance of a piezo that change according to temperature changes.

As shown in FIG. 7, the piezo 160 has capacitance and impedance characteristics that are affected depending on a temperature. The capacitance has the characteristic of increasing as the temperature increases and decreasing as the temperature decreases. The impedance has the characteristic of decreasing as the temperature increases and increasing as the temperature decreases.

In other words, when the temperature increases, the capacitance increases and the impedance decreases, and thus the output of the piezo changes to increase. When the temperature decreases, the capacitance decreases and the impedance increases, and thus the output of the piezo changes to decrease.

Accordingly, the control device 140 may adjust the output intensity according to the temperature by estimating the temperature of the piezo 160 and adaptively controlling the output level of an audio signal based on the capacitance and impedance of the piezo 160 according to the estimated temperature. Here, the control device 140 may estimate the temperature of the piezo 160 based on a temperature value received from a temperature sensor of a vehicle or an internal temperature sensor of a lamp.

According to an embodiment, the control device 140 may estimate the temperature of the piezo 160 based on the temperature value received from the temperature sensor of the vehicle or the internal temperature sensor of the lamp and experimental data on the temperature of the piezo 160.

According to an embodiment, the control device 140 may additionally reflect environmental information including a vehicle location, current weather, or the like and then may estimate the temperature of the piezo 160 for the received temperature value. In contrast, the reflected information is not limited or restricted to the above-described information. Various pieces of information applicable to the technology of the present disclosure may be additionally reflected.

As described above, the apparatus according to an embodiment of the present disclosure may lower the output because the output at an elevated temperature is higher than the output at room temperature, thereby reducing power consumption. The apparatus according to an embodiment of the present disclosure may adjust the output to be higher because the output is lower at low temperature, thereby increasing sound pressure.

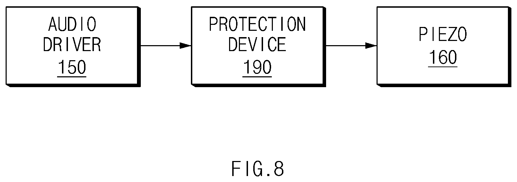

FIG. 8 is a block diagram of an embodiment for describing a protection device.

The piezo 160 generates electricity when pressure is applied due to a piezoelectric direct effect, and vibrates when electricity is applied due to a piezoelectric converse effect. When the piezo 160 is powered by vehicle vibration in a state where the piezo 160 is not powered because sound is not output, the electricity generated by the piezo 160 may flow in reverse to a circuit of the audio driver 150, causing damage to the circuit. Accordingly, as illustrated in FIG. 8, an apparatus according to the embodiment of the present disclosure may further include a protection device 190, which is placed between the audio driver 150 and the piezo 160 and which is used to prevent electricity from flowing into the circuit of the audio driver 150 by discharging the electricity generated from the piezo 160 by the vibration of the vehicle in a state where the piezo 160 is not powered.

Here, the protection device 190 may include a circuit that discharges the charged electricity even when the piezo 160 is charged. For example, the protection device 190 may include a circuit in which a capacitor and a resistor are connected in series to GND. When the charge charged in the piezo 160 flows into the circuit, the protection device 190 may protect the circuit by draining to GND through the protection device 190.

As such, an apparatus according to an embodiment of the present disclosure may drive a piezo with high capacitance and low impedance in a sound output lamp using the piezo.

Moreover, the apparatus according to an embodiment of the present disclosure may prevent lamp failure by diagnosing the open load of the piezo in the sound output lamp equipped with the piezo having high capacitance and low impedance and preventing over-current occurring due to low impedance, thereby preventing accidents that may occur due to lamp failure.

Furthermore, the apparatus according to an embodiment of the present disclosure may provide a voice output constantly even when a temperature changes, by adaptively controlling the output level of an audio signal in consideration of changes in capacitance and impedance of the piezo due to a temperature changes.

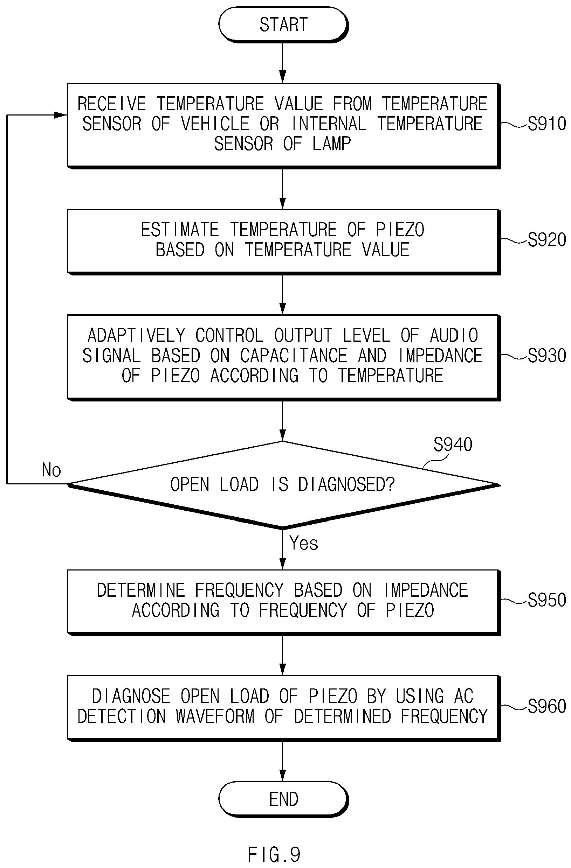

FIG. 9 is a flowchart illustrating an operation of a sound output lamp control method, according to another embodiment of the present disclosure, and is a flowchart illustrating an operation of a method of controlling the apparatus of FIGS. 1 to 8.

Referring to FIG. 9, a sound output lamp control method according to another embodiment of the present disclosure receives a temperature value from a temperature sensor of a vehicle or an internal temperature sensor of a lamp (S910).

When receiving the vehicle temperature value or the lamp internal temperature value in S910, the method estimates the temperature of a piezo based on the received temperature value (S920).

According to an embodiment, in S920, the method may estimate the temperature of the piezo based on the temperature value received from the temperature sensor of the vehicle or the internal temperature sensor of the lamp and experimental data on the temperature of the piezo.

According to an embodiment, in S920, the method may additionally reflect environmental information including a vehicle location, current weather, or the like and then may estimate the temperature of the piezo for the received temperature value.

When the temperature of the piezo is estimated in S920, the method adaptively controls the output level of the audio signal based on the capacitance and impedance of the piezo according to the estimated temperature (S930).

Here, the capacitance and impedance of the piezo according to a temperature may be as shown in FIG. 7.

Through the above-described process, the method according to an embodiment of the present disclosure may adaptively adjust the output level of an audio signal to be output from a sound output lamp according to a temperature change.

Moreover, the method according to an embodiment of the present disclosure determines whether to diagnose an open load of the piezo and determines a frequency based on impedance according to the frequency of the piezo when diagnosing the open load of the piezo (S940, S950).

When the frequency at which the open load is to be diagnosed is determined in S950, the method according to an embodiment of the present disclosure diagnoses the open load of the piezo by using the AC detection waveform of the determined frequency (S960).

According to an embodiment, in S960, the method may detect the impedance of the piezo by using an AC detection waveform of a determined frequency and may diagnose the open load of the piezo by comparing the detected impedance of the piezo with the impedance of the piezo at each predetermined frequency.

Furthermore, the method according to an embodiment of the present disclosure may further include a process of controlling an output voltage of a boost converter for supplying a driving voltage to an amplifier of an audio driver depending on an output level of an audio signal.

Even though the description is omitted in the method according to another embodiment of the present disclosure, it will be apparent to those skilled in the art that the method according to another embodiment of the present disclosure may include all of the contents described in the apparatus of FIGS. 1 to 8, and this will be obvious to those skilled in the art.

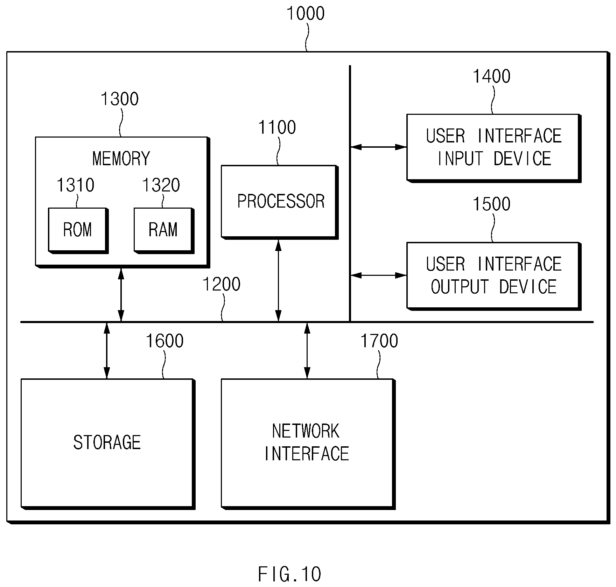

FIG. 10 shows a block diagram of a computing system for executing a method for controlling a sound output lamp, according to another embodiment of the present disclosure.

Referring to FIG. 10, a sound output lamp controlling method according to another embodiment of the present disclosure described above may also be implemented through a computing system. A computing system 1000 may include at least one processor 1100, a memory 1300, a user interface input device 1400, a user interface output device 1500, storage 1600, and a network interface 1700, which are connected with each other through a system bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read only memory (ROM) 1310 and a random-access memory (RAM) 1320.

Accordingly, the operations of the method or algorithm described in connection with embodiments disclosed in the specification may be directly implemented with a hardware module, a software module, or a combination of the hardware module and the software module, which is executed by the processor 1100. The software module may reside on a storage medium (i.e., the memory 1300 and/or the storage 1600) such as a random access memory (RAM), a flash memory, a read only memory (ROM), an erasable and programmable ROM (EPROM), an electrically EPROM (EEPROM), a register, a hard disk drive, a removable disc, or a compact disc-ROM (CD-ROM). The storage medium may be coupled to the processor 1100. The processor 1100 may read out information from the storage medium and may write information in the storage medium. Alternatively, the storage medium may be integrated with the processor 1100. The processor 1100 and storage medium may be implemented with an application specific integrated circuit (ASIC). The ASIC may be provided in a user terminal. Alternatively, the processor 1100 and storage medium may be implemented with separate components in the user terminal.

The above description is merely an example of the technical idea of the present disclosure, and various modifications and modifications may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

According to an embodiment of the present disclosure, a piezo with high capacitance and low impedance may be driven in a sound output lamp using the piezo.

According to an embodiment of the present disclosure, lamp failure may be prevented by diagnosing the open load of a piezo in a sound output lamp equipped with the piezo having high capacitance and low impedance and preventing over-current occurring due to low impedance, thereby preventing accidents that may occur due to lamp failure.

According to an embodiment of the present disclosure, even when a temperature changes, a voice output may be provided constantly by adaptively controlling the output level of an audio signal in consideration of changes in capacitance and impedance of a piezo due to a temperature changes.

Effects obtained in the present disclosure are not limited to the above-mentioned effects, and other effects that are not mentioned will be clearly understood by those skilled in the art, to which the present disclosure belongs, from the following description.

## Claims

1. An apparatus for controlling a sound output lamp, comprising:
a piezo having a stacked structure and configured to output a sound by vibrating an outer lens of the sound output lamp or a surface of a housing;
an audio driver configured to generate power for driving audio of the piezo;
an over-current prevention device disposed between the audio driver and the piezo and configured to prevent, at the piezo, an over-current of a first frequency or higher in a high-frequency domain; and
a control device configured to provide the audio driver with an audio signal for controlling an audio output of the piezo,
wherein the over-current prevention device disposed between the audio driver and the piezo or configured as a software filter within the control device.

2. The apparatus of claim 1, wherein the over-current prevention device includes at least one resistor or a low-pass filter having the first frequency as a cut-off frequency.

3. The apparatus of claim 1, or 2, wherein the control device is configured to diagnose an open load of the piezo.

4. The apparatus of claim 3, wherein the control device is configured to:
determine a second frequency for diagnosing the open load of the piezo based on an impedance according to a third frequency of the piezo; and
diagnose the open load of the piezo by using an AC detection waveform of the determined second frequency.

5. The apparatus of claim 3, or 4, wherein:
the piezo is mounted on a circuit board equipped with an open load diagnosis terminal, and
the control device is configured to diagnose the open load of the piezo based on whether a predetermined specific voltage is detected through the open load diagnosis terminal.

6. The apparatus of any one of claims 1 to 5, wherein the control device is configured to:
estimate a first temperature of the piezo based on a second temperature value received from a temperature sensor of a vehicle or an internal temperature sensor of the lamp; and
adaptively control an output level of the audio signal based on a capacitance and impedance of the piezo according to the estimated first temperature.

7. The apparatus of any one of claims 1 to 6, further comprising a protection device disposed between the audio driver and the piezo and configured to prevent electricity from flowing into the audio driver by discharging the electricity generated from the piezo by vibration of a vehicle in a state where no electricity is applied to the piezo.

8. An apparatus for controlling a sound output lamp, the apparatus comprising:
a piezo having a stacked structure and configured to output a sound by vibrating an outer lens of the sound output lamp or a surface of housing;
an audio driver configured to generate power for driving audio of the piezo; and
a control device configured to:
estimate a first temperature of the piezo based on a second temperature value received from a temperature sensor of a vehicle or an internal temperature sensor of the sound output lamp;
adaptively control an output level of an audio signal based on a capacitance and impedance of the piezo according to the estimated first temperature; and
provide the audio driver with the audio signal, of which the output level is adaptively controlled.

9. The apparatus of claim 8, wherein the control device is configured to:
determine a first frequency for diagnosing an open load of the piezo based on an impedance according to a second frequency of the piezo; and
diagnose the open load of the piezo by using an AC detection waveform of the determined first frequency.

10. The apparatus of claim 8, or 9, further comprising an over-current prevention device disposed between the audio driver and the piezo and configured to prevent, at the piezo, an over-current of the piezo of a first frequency or higher in a high-frequency domain.

11. The apparatus of claim 10, wherein the over-current prevention device includes at least one resistor or a low-pass filter having the first frequency as a cut-off frequency.

12. The apparatus of any one of claims 8 to 11, further comprising a protection device disposed between the audio driver and the piezo and configured to prevent electricity from flowing into the audio driver by discharging the electricity generated from the piezo by vibration of the vehicle in a state where no electricity is applied to the piezo.

13. A method of controlling a sound output lamp including (1) a piezo configured to output a sound by vibrating an outer lens of the sound output lamp or a surface of housing, (2) an audio driver configured to generate power for driving audio of the piezo, and (3) a control device configured to provide the audio driver with an audio signal for controlling an audio output of the piezo, the method comprising:
receiving a temperature value from a temperature sensor of a vehicle or an internal temperature sensor of the sound output lamp;
estimating a temperature of the piezo based on the received temperature value; and
adaptively controlling an output level of the audio signal based on a capacitance and impedance of the piezo according to the estimated temperature.

14. The method of claim 13, wherein adaptively controlling the output level of the piezo includes controlling an output voltage of a boost converter configured to supply a driving voltage to an amplifier of the audio driver depending on the output level of the audio signal.

15. The method of claim 14, further comprising:
determining a first frequency based on an impedance according to a second frequency of the piezo when an open load of the piezo is to be diagnosed; and
diagnosing the open load of the piezo by using an AC detection waveform of the determined first frequency.
